# EUROPEAN PATENT SPECIFICATION

(11) **EP 3 412 886 B1**
(45) Date of publication and mention of the grant of the patent: **08.12.2021**
(21) Application number: 17747414.5
(22) Date of filing: 31.01.2017
(51) Int. Cl.: F01P 7/04, F01P 11/14, B60H 1/00, F04D 25/08, F04D 27/00, F01P 5/04

(54) **COOLING FAN CONTROL DEVICE**
STEUERUNGSVORRICHTUNG FÜR KÜHLGEBLÄSE
DISPOSITIF DE COMMANDE DE VENTILATEUR DE REFROIDISSEMENT

(30) Priority: 04.02.2016 JP 2016019964
(43) Date of publication of application: 12.12.2018
(73) Proprietor: Mitsuba Corporation, Kiryu-shi, Gunma 376-8555 (JP)
(72) Inventor: KOSHIO, Fumiaki, Kiryu-shi Gunma 376-8555 (JP); OGANE, Takahiko, Kiryu-shi Gunma 376-8555 (JP); ISHII, Masamichi, Kiryu-shi Gunma 376-8555 (JP); KUSUMOTO, Wataru, Kiryu-shi Gunma 376-8555 (JP)
(74) Representative: Cabinet Laurent & Charras
(86) International application number: PCT/JP2017/003449
(87) International publication number: WO 2017/135258

(56) References cited:
- JP-A- H10 121 968
- JP-A- H10 121 968
- JP-A- H11 218 025
- JP-A- H11 218 025
- JP-A- 2010 220 294
- JP-A- 2010 220 294
- US-A1- 2015 365 039

## Description

### [Technical Field]

The present invention relates to a cooling fan controller.

### [Background Art]

In the related art, a cooling system configured to cool a radiator by blowing cooling air to a radiator mounted in a vehicle is known (for example, see Patent Literature 1). The cooling system includes a cooling fan configured to blow cooling air, and a cooling fan controller configured to control rotation of the cooling fan. The cooling system supplies a rotational speed signal indicating a rotational speed (a rotational speed per unit time) of the cooling fan, serving as a signal used in a host electronic control unit (ECU) to determine an abnormality in the cooling system, to the host ECU in order to support requirements for on-board diagnostics (OBD).

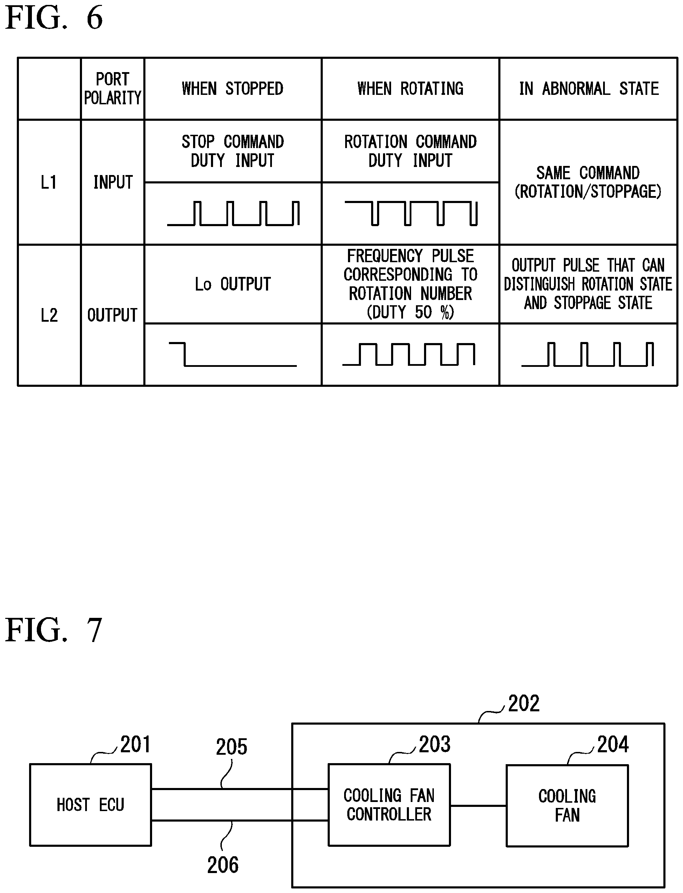

Fig. 7 is a view for explaining a method of detecting an abnormality in a cooling system 202 of a host ECU 201 in the related art. As shown in Fig. 7, the cooling system 202 includes a cooling fan controller 203 and a cooling fan 204. Further, the cooling fan controller 203 and the host ECU 201 are connected by two signal lines 205 and 206.

The cooling fan controller 203 acquires a rotation command from the host ECU 201 via the signal line 205. For example, the rotation command is a signal obtained by varying a duty according to a rotational speed serving as a target. Accordingly, the cooling fan controller 203 controls a rotational speed of the cooling fan 204 such that it becomes a rotational speed based on the rotation command. In addition, the cooling fan controller 203 outputs rotational speed information indicating the actual rotational speed of the cooling fan 204 to the host ECU 201 via the signal line 206. For example, the rotational speed signal is a signal of a frequency pulse corresponding to the actual rotational speed of the cooling fan 204. The cooling fan controller 203 outputs a signal of a low level to the signal lines 205 and 206 when an abnormality in the cooling system 202 is detected. Accordingly, the host ECU 201 determines the presence of an abnormality in the cooling system 202 by determining whether the signal supplied from the signal line 206 is any one of the rotational speed signal or the low level signal and whether the signal from the signal line 205 is a signal of a low level.

Document US2015/365039A1 discloses a further example of cooling fan controller of the prior art, comprising the features of the preamble of claim 1.

### [Citation List]

### [Patent Literature]

[Patent Literature 1]

Japanese Unexamined Patent Application, First Publication No. 2004-353457

### [Summary of Invention]

### [Technical Problem]

However, when the cooling fan 204 is stopped, the cooling fan controller 203 in the related art supplies a signal of a low level to the host ECU 201 via the signal line 206 because a rotational speed is 0. For this reason, the host ECU 201 cannot distinguish between whether the cooling fan 204 is stopped or in a state in which an abnormality has occurred in the cooling system 202 from only the state of a signal supplied from the signal line 206. Accordingly, the cooling fan controller 203 needs to output signals of a low level to both of the signal line 205 and the signal line 206 when an abnormality is detected in the cooling system 202. Accordingly, the host ECU 201 determines whether an abnormality is present in the cooling system 202 on the basis of the signal level of the signals supplied from both of the signal line 205 and the signal line 206. For this reason, determination of whether an abnormality is present in the cooling system 202 using the host ECU 201 may be complicated.

An aspect of the present invention is to provide a cooling fan controller capable of easily determining an abnormality in a cooling system using a host ECU.

### [Solution to Problem]

According to the invention, a cooling fan controller as defined in claim 1 is provided.

In addition, according to the aspect of the present invention, in the above-mentioned cooling fan controller, the first signal may be a pulse signal of a first frequency according to the rotational speed of the cooling fan, and the second signal may be a pulse signal of a second frequency other than the first frequency.

In addition, according to the aspect of the present invention, in the above-mentioned cooling fan controller, the first signal may be a signal of a first duty ratio according to a rotational speed of the cooling fan, and the second signal may be a signal of a second duty ratio other than the first duty ratio.

In addition, according to the aspect of the present invention, in the above-mentioned cooling fan controller, in the case in which the abnormality is not detected, the output part may output the first signal to the second signal line when the cooling fan is rotating and output a third signal different from both of the first signal and the second signal to the second signal line when the cooling fan is stopped.

In addition, according to the aspect of the present invention, in the above-mentioned cooling fan controller, the cooling fan may be a fan for cooling a radiator of a vehicle.

### [Advantageous Effects of Invention]

According to the aspect of the present invention, it is possible to provide a cooling fan controller capable of easily determining the presence of an abnormality in a cooling system using a host ECU.

### [Brief Description of Drawings]

Fig. 1 is a view showing an example of a schematic configuration showing a cooling system 1 including a cooling fan controller according to an embodiment.
Fig. 2 is a view showing an example of a schematic configuration of a cooling fan controller 10 according to the embodiment.
Fig. 3 is a view showing an example of a schematic configuration of a motor driving part 101 according to the embodiment.
Fig. 4 is a view for explaining a flow of processing of the cooling fan controller 10 according to the embodiment.
Fig. 5 is a view for explaining a signal passing through a first signal line L1 and a signal passing through a second signal line L2 in a cooling fan controller in the related art.
Fig. 6 is a view for explaining a signal passing through the first signal line L1 and a signal passing through the second signal line L2 in the cooling fan controller 10 according to the embodiment.
Fig. 7 is a view for explaining a method of detecting an abnormality in a cooling system 202 of a host ECU 201 in the related art.

### [Description of Embodiments]

Hereinafter, while the present invention will be described through an embodiment of the present invention, the following embodiment does not limit the present invention according to claims. In addition, not all combinations of features described in the embodiment are essential to the solution means of the present invention. Further, in the drawings, the same or similar parts are designated by the same reference numerals and duplicated description thereof may be omitted.

A cooling fan controller of an embodiment is connected to a host controller via a first signal line and a second signal line, and controls rotation of a cooling fan on the basis of a rotation command output from the host controller via the first signal line. Further, the cooling fan controller includes a detector configured to detect an abnormality of a monitoring target, and output a first signal to a second signal line according to rotation of the cooling fan when the abnormality is not detected. On the other hand, the cooling fan controller outputs a second signal different from the first signal to the second signal line when the abnormality is detected by the abnormality detector.

Accordingly, since the host controller can determine the presence of an abnormality of a monitoring target on the basis of only a signal supplied via the second signal line, the presence of the abnormality can be easily determined in comparison with the related art. Hereinafter, the cooling fan controller according to the embodiment will be described with reference to the accompanying drawings.

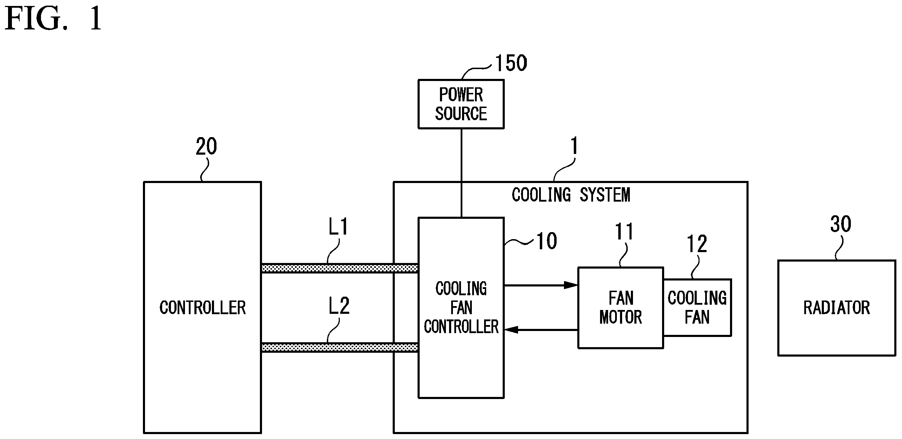

Fig. 1 is a view showing an example of a schematic configuration showing a cooling system 1 including a cooling fan controller according to the embodiment.

As shown in Fig. 1, the cooling system 1 cools a radiator 30 mounted on a vehicle by blowing cooling air to the radiator 30 on the basis of a rotation command supplied from a controller 20. For example, the controller 20 is an electronic control unit (ECU).

The cooling system 1 includes a cooling fan controller 10, a fan motor 11 and a cooling fan 12. The cooling fan controller 10 is connected to the controller 20 via a first signal line L1 and a second signal line L2.

The cooling fan controller 10 controls rotation of the fan motor 11 (for example, a brushless motor) on the basis of the rotation command output from the controller 20 via the first signal line L1. Accordingly, since the fan motor 11 is rotating, the cooling fan 12 is rotated, and the radiator 30 is cooled by the cooling air generated by rotation of the cooling fan 12. Here, the rotation command is a signal for rotating the fan motor 11 and may be a signal for rotating the fan motor 11 at a preset rotational speed. In addition, the rotation command may be a signal for rotating the fan motor 11 and may be a signal for showing a duty ratio corresponding to a target value of the rotational speed (a rotational speed per unit time) for rotating the fan motor 11. For example, when the rotation command is the duty ratio, the cooling fan controller 10 controls a rotational speed of the fan motor 11 such that it becomes a target rotational speed indicated by the duty ratio supplied via the first signal line L1. In the embodiment, the case in which the rotation command is a signal showing the duty ratio corresponding to a target value of the rotational speed for rotating the fan motor 11 will be described.

In addition, the cooling fan controller 10 stops control of rotation of the fan motor 11 on the basis of a stop command output from the controller 20 via the first signal line L1. Accordingly, since rotation of the fan motor 11 is stopped, rotation of the cooling fan 12 is also stopped. Accordingly, cooling of the radiator 30 by the cooling air of the cooling fan 12 is stopped. The stop command is a signal for stopping rotation of the fan motor 11, and for example, has a duty ratio that is not used for the rotation command. For example, a duty ratio of 50 % or more and less than 100 % is used for the rotation command, and a duty ratio of 0 % or more and less than 50 % is used for the stop command.

In addition, the cooling fan controller 10 has a function of detecting an abnormality of a monitoring target in a mechanism configured to control the cooling fan 12. The cooling fan controller 10 outputs a first signal corresponding to rotation of the fan motor 11 to the second signal line L2 when an abnormality of the monitoring target is not detected. On the other hand, the cooling fan controller 10 outputs a second signal different from the first signal to the second signal line L2 when an abnormality of the monitoring target is detected. Hereinafter, the cooling fan controller 10 according to the embodiment will be described in detail.

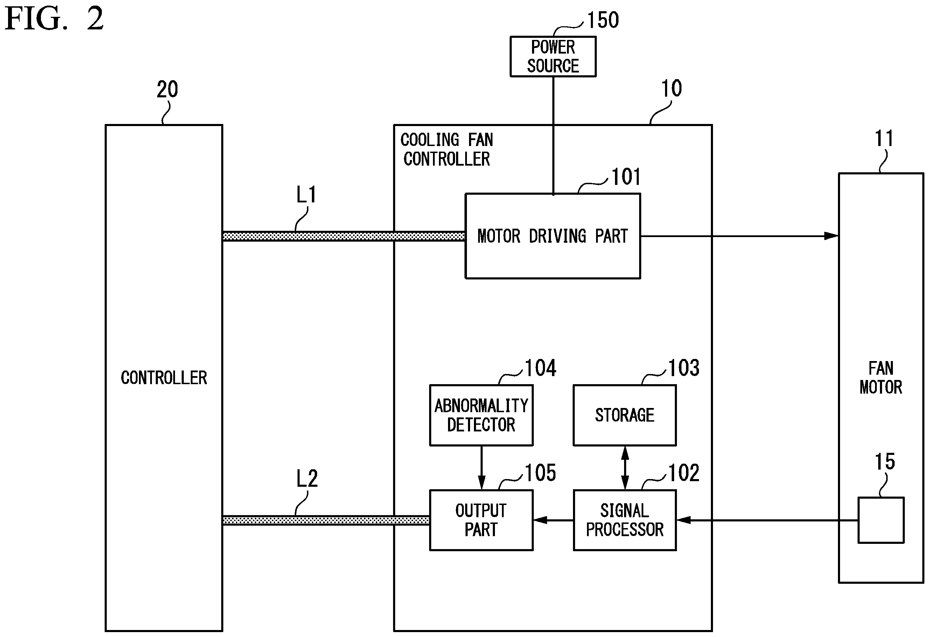

Fig. 2 is a view showing an example of a schematic configuration of the cooling fan controller 10 according to the embodiment.

The cooling fan controller 10 includes a motor driving part 101, a signal processor 102, a storage 103, an abnormality detector 104 and an output part 105.

The motor driving part 101 is connected to the controller 20 via the first signal line.

The motor driving part 101 controls a rotational speed of the fan motor 11 on the basis of the rotation command supplied from the first signal line L1.

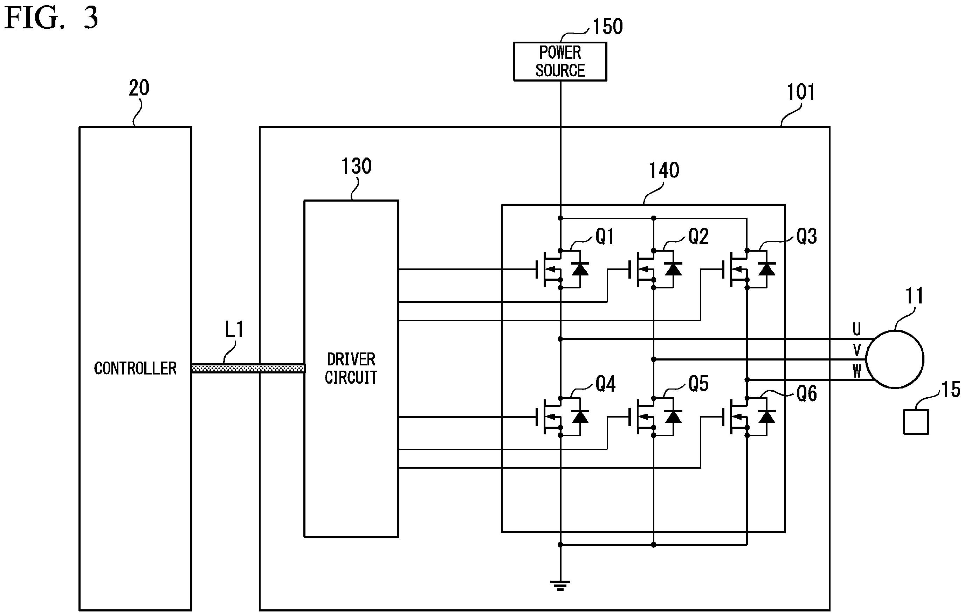

Fig. 3 is a view showing an example of a schematic configuration of the motor driving part 101 according to the embodiment.

As shown in Fig. 3, the motor driving part 101 includes a driver circuit 130 and an inverter 140.

The inverter 140 includes six switching elements Q1 to Q6 connected to each other as a 3-phase bridge form, and freewheeling diodes connected anti-parallel between drains and sources of each of the switching elements Q1 to Q6. For example, the switching elements Q1 to Q6 is field effective transistors (FET; effect switching elements), or insulated gate bipolar transistors (IGBT; insulating gate bipolar switching elements). Gates of the bridge-connected six switching elements Q1 to Q6 are connected to the driver circuit 130.

A connecting point between the switching element Q1 and the switching element Q4 is connected to the stator winding U of the fan motor 11. A connecting point between the switching element Q2 and the switching element Q5 is connected to a stator winding V. A connecting point between the switching element Q3 and the switching element Q6 is connected to a stator winding W. Accordingly, the six switching elements Q1 to Q6 perform switching operations using driving signals (gate signals) G1 to G6 output from the driver circuit 130, convert a direct current power source voltage of a power source 150 applied to the inverter 140 into an alternating current voltage of 3 phases (a U phase, a V phase and a W phase), and output the converted alternating current voltage to stator windings U, V and W.

The driver circuit 130 generates a driving signal for turning on/off a switching element in the inverter 140 on the basis of the rotation command acquired from the controller 20 via the first signal line L1.

As shown in Fig. 2, a rotation detector 15 detects rotation of the fan motor 11. For example, the rotation detector 15 is connected to the signal processor 102. For example, the rotation detector 15 detects a variation of a magnetic flux of a sensor magnet provided in the fan motor 11 using a giant magneto resistive (GMR) effect sensor. In addition, the rotation detector 15 is, for example, a magnetic encoder. The magnetic encoder outputs rotation detection signals of an A phase, a B phase and a Z phase to the signal processor 102 according to a variation of the detected magnetic flux of the sensor magnet. Further, in the embodiment, the rotation detector 15 may be configured to detect rotation of the fan motor 11 but is not limited thereto. For example, the rotation detector 15 may detect rotation of the fan motor 11 on the basis of induced voltages of the stator windings U, V and W from motor terminals of three phases. That is, in the embodiment, the sensor configured to detect rotation of the fan motor 11 may be provided, and rotation of the fan motor 11 may be detected with no sensor.

The signal processor 102 generates a first signal corresponding to rotation of the fan motor 11 on the basis of the rotation detection signal output from the rotation detector 15. According to the invention, the signal processor 102 acquires a rotational speed of the fan motor 11 on the basis of the rotation detection signal output from the rotation detector 15. Then, the signal processor 102 generates a first signal according to the rotational speed of the fan motor 11 on the basis of the acquired rotational speed of the fan motor 11. Here, the first signal may be any signal indicating the rotation of the fan motor 11. For example, the first signal is a signal of a fixed duty ratio (for example, 50 %), and a signal having a frequency varying according to the rotational speed of the fan motor 11. Hereinafter, the frequency of the first signal varying according to the rotational speed of the fan motor 11 may be referred to as a first frequency.

The storage 103 has a table therein in advance in which a rotational speed of the fan motor 11 is related to a frequency corresponding to the rotational speed. Accordingly, the signal processor 102 reads out the frequency corresponding to the acquired rotational speed of the fan motor 11 from the table stored in the storage 103. Then, the signal processor 102 outputs the signal of the obtained frequency, which is a signal of a preset duty ratio (first duty ratio), to the output part 105 as the first signal.

The abnormality detector 104 detects an abnormality of the monitoring target. For example, the monitoring target is a voltage abnormality such as an over-voltage, a low voltage, or the like, in the cooling fan controller 10. The abnormality detector 104 outputs an abnormality signal showing occurrence of an abnormality of the monitoring target to the output part 105 when an abnormality of the monitoring target is detected.

The output part 105 outputs the first signal from the signal processor 102 to the second signal line L2 when an abnormality of the monitoring target is not detected by the abnormality detector 104. The output part 105 outputs the second signal different from the first signal to the second signal line L2 when an abnormality of the monitoring target is detected by the abnormality detector 104. That is, the output part 105 outputs the first signal from the signal processor 102 to the second signal line L2 when an abnormality signal is not supplied from the abnormality detector 104. The output part 105 outputs the second signal to the second signal line L2 when the abnormality signal is supplied from the abnormality detector 104. The second signal may be a signal different from the first signal. For example, when the first signal is a signal having a fixed duty ratio (for example, 50 %) and a signal having a frequency that varies according to the rotational speed of the fan motor 11, the second signal is a signal having a second duty ratio (for example, 20 %) different from the first duty ratio or a signal having a frequency (a second frequency) other than the first frequency.

Here, the fan motor 11 has a rotating state in which the fan motor 11 is rotating, and a stopped state in which rotation of the fan motor 11 is stopped. When the fan motor 11 is in the stopped state, the rotational speed of the fan motor 11 is 0. For this reason, the first signal is a signal of a low level when the frequency is 0, i.e., for example, the first signal is a high active signal. Accordingly, the output part 105 outputs a first signal of a low level to the second signal line L2 when an abnormality of the monitoring target is not detected by the abnormality detector 104 and when the fan motor 11 is in the stopped state.

However, there is no limitation thereto in the embodiment, and for example, the output part 105 may output a third signal different from the first signal when an abnormality of the monitoring target is not detected by the abnormality detector 104 and when the fan motor 11 is in the stopped state. In this case, the third signal is a signal different from the first signal and the second signal. In other words, the output part 105 outputs the signal (the second signal) that allows distinguishing between the rotating state and the stoppage stage of the fan motor 11 to the second signal line L2 when an abnormality of the monitoring target is detected by the abnormality detector 104. Accordingly, the controller 20 can determine the presence of an abnormality of the monitoring target by determining whether the signal output from the signal line L2 is the second signal. In this way, the controller 20 can determine the presence of an abnormality of the monitoring target on the basis of the signal output from the signal line L2 only.

Hereinafter, a flow of processing of the cooling fan controller 10 according to the embodiment will be described.

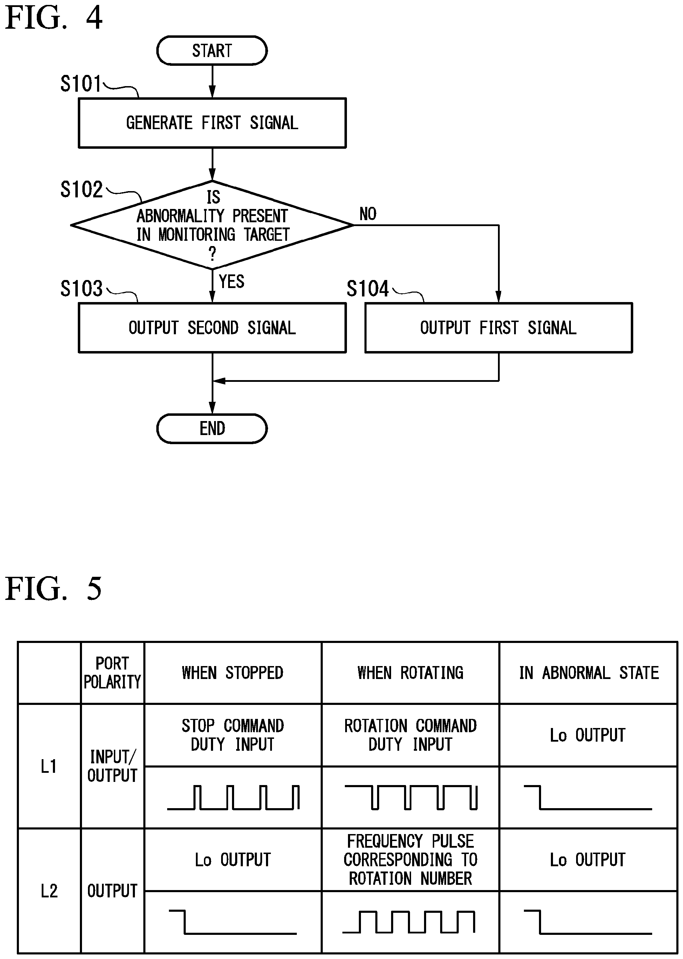

Fig. 4 is a view for explaining the flow of the processing of the cooling fan controller 10 according to the embodiment. The cooling fan controller 10 performs the processing described below at fixed time intervals.

The signal processor 102 generates a first signal corresponding to rotation of the fan motor 11 on the basis of the rotation detection signal output from the rotation detector 15 (step S101). The signal processor 102 outputs the generated first signal to the output part 105.

The output part 105 determines whether abnormality is present in the monitoring target (step S102). For example, the output part 105 determines that the abnormality is present in the monitoring target when the abnormality signal is acquired from the abnormality detector 104. On the other hand, the output part 105 determines that an abnormality of the monitoring target is not present when no abnormality signal is acquired from the abnormality detector 104.

The output part 105 outputs the second signal to the second signal line L2 when it is determined that the abnormality is present in the monitoring target (step S103). On the other hand, the output part 105 outputs the first signal to the second signal line L2 when it is determined that an abnormality of the monitoring target is not present (step S104). Accordingly, the controller 20 can determine the presence of an abnormality of the monitoring target by simply determining whether the signal output from the signal line L2 is the second signal.

Hereinafter, effects according to the embodiment will be described with reference to Figs. 5 and 6.

Fig. 5 is a view for explaining a signal passing through the first signal line L1 and a signal passing through the second signal line L2 in the cooling fan controller in the related art. Fig. 6 is a view for explaining a signal passing through the first signal line L1 and a signal passing through the second signal line L2 in the cooling fan controller 10 according to the embodiment.

As shown in Fig. 5, when abnormality is present in the cooling fan controller 203 in the related art, a signal of a low level is output to the first signal line L1 and the second signal line L2. However, the cooling fan controller in the related art outputs the signal of the low level to the controller 20 via the second signal line L2 when the fan motor 11 is in the stopped state in the case in which no abnormality is present. For this reason, the controller 20 cannot distinguish between the stopped state of the fan motor 11 and an abnormality in the cooling fan controller 203 using only the signal output from the second signal line L2. Accordingly, when abnormality is present in the cooling fan controller 203, the controller 20 needs to determine the presence of an abnormality in the cooling fan controller 203 on the basis of the signal output from the first signal line L1. In addition, the controller 20 needs to have a portion to which the first signal line L1 is connected as an input/output port because a stop command or a rotation command needs to be output to the cooling fan controller via the first signal line L1.

As shown in Fig. 6, the cooling fan controller 10 according to the embodiment outputs a second signal that allows distinguishing between rotating state and the stopped state of the fan motor 11 to the second signal line L2 when abnormality is present. Accordingly, the controller 20 can determine the presence of an abnormality in the cooling fan controller 10 on the basis of the signal output from the second signal line L2. Accordingly, the controller 20 may use a port to which the first signal line L1 is connected as an input port.

That is, since the controller 20 may perform only processing of inputting with respect to the first signal line L1, a circuit of the controller 20 can be simplified.

As described above, when no abnormality is detected in the cooling fan controller 10 according to the embodiment, the first signal corresponding to rotation of the fan motor 11, i.e., the cooling fan 12 is output to the second signal line L1. When abnormality is detected in the cooling fan controller 10, the second signal different from the first signal is output to the second signal line L2. Accordingly, the controller 20 can determine the presence of an abnormality in the cooling fan controller 10 on the basis of only the signal output from the second signal line L2. Accordingly, in comparison with the related art, the presence of an abnormality in the cooling system 1 by the controller 20 can be easily determined.

Parts of the cooling fan controller 10 may be realized by hardware, may be realized by software, or may be realized by combination of hardware and software. In addition, a computer may function as a part of the cooling fan controller 10 by executing a program. The program may be stored in a computer-readable medium, or may be stored in a storage device connected to a network.

Hereinabove, while the embodiment of the present invention has been described in detail with reference to the accompanying drawings, a specific configuration is not limited to the embodiment and designs or the like not departing from the scope of the present invention, as defined by the appended claims, are included.

### [Reference Signs List]

- 1: Cooling system
- 10: Cooling fan controller
- 11: Fan motor
- 12: Cooling fan
- 20: Control device
- 101: Motor driving part
- 102: Signal processor
- 103: Storage
- 104: Abnormality detector
- 105: Output part

## Claims

1. A cooling fan controller that is configured to be connected to a host controller (20) via a first signal line (L1) and a second signal line and that is configured to control rotation of a cooling fan (12) on the basis of a rotation command output from the host controller (20) via the first signal line (L1), wherein the cooling fan controller (10) comprises:
an abnormality detector (104) configured to detect an abnormality of a monitoring target in a mechanism configured to control the cooling fan (12); **characterized in that** the cooling fan controller further comprises:
a storage (103) storing a table in which a rotational speed of the cooling fan (12) is related to a duty ratio corresponding to the rotational speed of the cooling fan (12);
a signal processor (102) configured to acquire a rotational speed of the cooling fan (12) and to generate a signal of a duty ratio corresponding to the acquired rotational speed with reference to the table; and
an output part (105) configured to:
- output a first signal to the second signal line (L2) when the abnormality is not detected by the abnormality detector (104), said first signal corresponding to the signal generated by the signal processor (102); and
- output a second signal to the second signal line (L2) when the abnormality is detected by the abnormality detector (104), said second signal being different from the first signal.

2. The cooling fan controller according to claim 1,
wherein the first signal is a signal of a first duty ratio according to a rotational speed of the cooling fan, and
the second signal is a signal of a second duty ratio other than the first duty ratio.

3. The cooling fan controller according to claim 2,
wherein the first signal is a signal of duty ratio of 50%, and
the second signal is a signal of duty ratio of 20%.

4. The cooling fan controller according to any one of claims 1 to 3,
wherein, in the case in which the abnormality is not detected, the output part (105) outputs the first signal to the second signal line (L2) when the cooling fan (12) is rotating, and outputs a third signal different from both of the first signal and the second signal to the second signal line (L2) when the cooling fan (12) is stopped.

5. The cooling fan controller according to any one of claims 1 to 4, wherein the cooling fan (12) is a fan for cooling a radiator of a vehicle.

## Patentansprüche

1. Eine Steuerungsvorrichtung für Kühlgebläse, konfiguriert zum Anschluss an eine Host- Steuerung (20) über eine erste Signalleitung (L1) und eine zweite Signalleitung und konfiguriert zur Steuerung der Rotation eines Kühlgebläses (12) auf der Basis eines Rotationsbefehls, ausgegeben von der Host- Steuerung (20) über die erste Signalleitung (L1), wobei die Steuerungsvorrichtung für Kühlgebläse (10) umfasst:
einen Abweichungsdetektor (104), konfiguriert zur Erkennung der Abweichung eines Überwachungsziels in einem Mechanismus, konfiguriert zur Steuerung des Kühlgebläses (12); ***dadurch gekennzeichnet, dass*** die Steuerungsvorrichtung für Kühlgebläse weiterhin umfasst:
einen Speicher (103), der eine Tabelle speichert, in der die Rotationsgeschwindigkeit des Kühlgebläses (12) zu einer Einschaltdauer in Beziehung gesetzt wird, die der Rotationsgeschwindigkeit des Kühlgebläses (12) entspricht;
einen Signalprozessor (102), konfiguriert zum Erfassen der Rotationsgeschwindigkeit des Kühlgebläses (12) und zur Erzeugung eines Signals mit einer Einschaltdauer entsprechend der erfassten Rotationsgeschwindigkeit unter Bezug auf die Tabelle; und
ein Ausgabeteil (105) konfiguriert zur
- Ausgabe eines ersten Signals an die zweite Signalleitung (L2), wenn die Abweichung vom Abweichungsdetektor (104) nicht erkannt wird, wobei dieses erste Signal dem vom Signalprozessor (102) erzeugten Signal entspricht; und
- Ausgabe eines zweiten Signals an die zweite Signalleitung (L2), wenn die Abweichung vom Abweichungsdetektor (104) erkannt wird, wobei dieses zweite Signal sich von dem vom Signalprozessor (102) erzeugten Signal unterscheidet.

2. Die Steuerungsvorrichtung für Kühlgebläse gemäß Anspruch 1, wobei es sich bei dem ersten Signal um das Signal mit einer ersten Einschaltdauer handelt, entsprechend einer Rotationsgeschwindigkeit des Kühlgebläses, und beim zweiten Signal handelt es sich um ein Signal mit einer zweiten Einschaltdauer, die sich von der ersten Einschaltdauer unterscheidet.

3. Steuerungsvorrichtung für Kühlgebläse nach Anspruch 2, wobei das erste Signal ein Signal mit einer Einschaltdauer von 50% ist, und das zweite Signal ein Signal mit einer Einschaltdauer von 20% ist.

4. Steuerungsvorrichtung für Kühlgebläse nach irgendeinem der Ansprüche 1 bis 3, wobei für den Fall, dass die Abweichung nicht erkannt wird, das Ausgabeteil (105) ein erstes Signal an die zweite Signalleitung (L2) ausgibt, wenn sich das Kühlgebläse (12) dreht, und ein drittes Signal, das sich sowohl vom ersten Signal wie vom zweiten Signal unterscheidet, an die zweite Signalleitung (L2) ausgibt, wenn das Kühlgebläse (12) angehalten wird.

5. Steuerungsvorrichtung für Kühlgebläse nach irgendeinem der Ansprüche 1 bis 4, wobei das Kühlgebläse (12) ein Gebläse zur Kühlung eines Fahrzeugkühlers ist.

## Revendications

1. Dispositif de commande de ventilateur de refroidissement qui est configuré de manière à être connecté à un dispositif de commande hôte (20) par l'intermédiaire d'une première ligne de signal (L1) et d'une seconde ligne de signal et qui est configuré de manière à commander la rotation d'un ventilateur de refroidissement (12) sur la base d'une commande de rotation qui est émise par le dispositif de commande hôte (20) par l'intermédiaire de la première ligne de signal (L1), dans lequel le dispositif de commande de ventilateur de refroidissement (10) comprend :
un détecteur d'anomalie (104) qui est configuré de manière à détecter une anomalie d'une cible de surveillance dans un mécanisme qui est configuré de manière à commander le ventilateur de refroidissement (12) ;
**caractérisé en ce que** le dispositif de commande de ventilateur de refroidissement comprend en outre :
une mémoire (103) qui stocke une table dans laquelle une vitesse de rotation du ventilateur de refroidissement (12) est associée à un rapport cyclique qui correspond à la vitesse de rotation du ventilateur de refroidissement (12) ;
un processeur de signal (102) qui est configuré de manière à acquérir une vitesse de rotation du ventilateur de refroidissement (12) et à générer un signal d'un rapport cyclique qui correspond à la vitesse de rotation acquise en se référant à la table ; et
une partie de sortie (105) qui est configurée de manière à :
- délivrer un premier signal à la seconde ligne de signal (L2) lorsque l'anomalie n'est pas détectée par le détecteur d'anomalie (104), ledit premier signal correspondant au signal qui est généré par le processeur de signal (102) ; et
- délivrer un deuxième signal à la seconde ligne de signal (L2) lorsque l'anomalie est détectée par le détecteur d'anomalie (104), ledit deuxième signal étant différent du premier signal.

2. Dispositif de commande de ventilateur de refroidissement selon la revendication 1, dans lequel le premier signal est un signal d'un premier rapport cyclique suivant une vitesse de rotation du ventilateur de refroidissement, et le deuxième signal est un signal d'un second rapport cyclique qui est différent du premier rapport cyclique.

3. Dispositif de commande de ventilateur de refroidissement selon la revendication 2, dans lequel le premier signal est un signal de rapport cyclique de 50 %, et le deuxième signal est un signal de rapport cyclique de 20 %.

4. Dispositif de commande de ventilateur de refroidissement selon l'une quelconque des revendications 1 à 3, dans lequel, dans le cas où l'anomalie n'est pas détectée, la partie de sortie (105) délivre le premier signal à la seconde ligne de signal (L2) lorsque le ventilateur de refroidissement (12) tourne, et délivre un troisième signal qui est différent à la fois du premier signal et du deuxième signal à la seconde ligne de signal (L2) lorsque le ventilateur de refroidissement (12) est arrêté.

5. Dispositif de commande de ventilateur de refroidissement selon l'une quelconque des revendications 1 à 4, dans lequel le ventilateur de refroidissement (12) est un ventilateur pour refroidir un radiateur d'un véhicule.
